# EUROPÄISCHE PATENTANMELDUNG

(11) **EP 2 030 838 A2**
(43) Veröffentlichungstag der Anmeldung: **04.03.2009**
(21) Anmeldenummer: 08012201.3
(22) Anmeldetag: 07.07.2008
(51) Int. Cl.: B60Q 1/08

(54) **Kraftfahrzeug mit einem Navigationssystem und einem AFL-Scheinwerfersystem**

(30) Priorität: 03.09.2007 DE 102007041703
(71) Anmelder: GM Global Technology Operations, Inc., Detroit, MI 48265-3000 (US)
(72) Erfinder: Balzer, Dirk, 55283 Nierstein (DE); Jacobs, Malte, 65462 Ginsheim-Gustavsburg (DE)
(74) Vertreter: Strauss, Peter

(57) **Zusammenfassung**

Ein Kraftfahrzeug (8) weist ein Navigationssystem (1) und ein AFL-Scheinwerfersystem (2) auf, wobei eine Ausrichtung mindestens eines Scheinwerfers des Kraftfahrzeugs mit Informationen des Navigationssystems (1) beeinflussbar ist. Zur Verbesserung der Ausleuchtung von vorausliegenden Fahrbahnabschnitten ist eine Anzahl an Fahrspuren bei der Ausrichtung des Scheinwerfers berücksichtigbar.

## Beschreibung

Die Erfindung bezieht sich auf ein Kraftfahrzeug mit einem Navigationssystem und einem AFL-Scheinwerfersystem, wobei eine Ausrichtung mindestens eines Scheinwerfers des Kraftfahrzeugs mit Informationen des Navigationssystems beeinflussbar ist.

Kraftfahrzeuge verfügen häufig ab Werk über ein Navigationssystem, um unter anderem von einem momentanen Standpunkt, der mit dem GPS- oder zukünftig mit dem Galileo-System ermittelt werden kann, eine Fahrtroute zu einem vom Nutzer des Kraftfahrzeugs vorgegebenen Ziel zu ermitteln und entsprechende Fahrtrichtungsangaben auszugeben. Dabei können Verkehrsmeldungen und Vorgaben des Nutzers, wie der Ausschluss von Mautstrecken, oder dergleichen berücksichtigt werden.

Weiterhin umfassen moderne Kraftfahrzeuge ein AFL-Scheinwerfersystem (engl.: adaptive forward lightning), bei dem entweder zusätzliche oder die beiden bereits vorhandenen Frontscheinwerfer, beispielsweise entsprechend des Lenkradeinschlagwinkels, um eine vertikale Achse verschwenkt werden können, um auch bei einer Kurvenfahrt eine optimale Ausleuchtung der vorausliegenden Fahrbahn zu erhalten. Des Weiteren können der oder die Scheinwerfer bzw. deren Lichtkegel um eine horizontale Achse verschwenkt werden, um einen Ausgleich für unterschiedliche Neigungswinkel der Fahrzeugkarosserie zu ermöglichen.

Aus der EP 1 415 856 A1, der DE 197 27 593 A1, der DE 103 47 552 A1 und der DE 101 39 152 A1 sind derartige Kraftfahrzeuge bekannt, wobei jeweils eine Ansteuerung des AFL-Scheinwerfersystems unter Berücksichtigung von Signalen des Navigationssystems erfolgt. Kommt vom Navigationssystem die Information, dass eine Kurvenfahrt unmittelbar bevorsteht, können die Scheinwerfer bereits entsprechend ausgerichtet werden, um den gekrümmten Fahrbahnabschnitt vor der Durchfahrt bereits auszuleuchten. Somit können Hindernisse rechtzeitig erkannt werden. Eine solche Ansteuerung unter Berücksichtigung der Signale des Navigationssystems kann von einem zentralen Steuergerät des Kraftfahrzeugs oder von einem Steuergerät des AFL-Scheinwerfersystems ausgeführt werden.

Zwar können mit den bekannten AFL-Scheinwerfer-systemen vorausliegende Kurvenbereiche mit Hilfe der vom Navigationssystem vorliegenden Informationen bereits ausgeleuchtet werden, jedoch besonders auf mehrspurigen Fahrbahnen reicht dies nicht aus, um eine tatsächlich einzuschlagende Fahrtstrecke ausreichend auszuleuchten.

Es ist Aufgabe der Erfindung, ein Kraftfahrzeug der eingangs genannten Art zu schaffen, bei dem besonders auf Autobahnen gewährleistet ist, dass die tatsächlich zu befahrenden Fahrbahnabschnitte ausreichend ausgeleuchtet sind.

Erfindungsgemäß wird die Aufgabe dadurch gelöst, dass eine Anzahl an Fahrspuren wie Anspruch 1 bei der Ausrichtung des Scheinwerfers berücksichtigbar ist.

Bei einem derart ausgebildeten Kraftfahrzeug bzw. einem AFL-Scheinwerfersystem ist es möglich, besonders bei mehrspurigen Fahrbahnen, wie Autobahnen, Schnellstraßen oder dergleichen, auch die seitlichen und/ oder seitlich vorausliegenden Bereiche benachbarter Fahrbahnen auszuleuchten, wodurch besonders bei einem beabsichtigten Spurwechsel dieser Fahrbahnabschnitt bereits ausgeleuchtet wird, um ein Hindernis rechtzeitig erkennen zu können. Z. B. kann vom dem Navigationssystem, insbesondere in Verbindung mit einem den Fahrzeugaußenraum überwachenden Kamerasystem eines Bildverarbeitungssystems, ermittelt werden, dass das Kraftfahrzeug sich auf der linken Fahrspur befindet und ein Wechsel auf die rechte Fahrspur unmittelbar bevorsteht, da beispielsweise auf der errechneten Fahrtroute zum Ziel die Autobahn bald verlassen wird. Dementsprechend wird das AFL-Scheinwerfersystem derart angesteuert, dass ein seitlich links oder rechts vorausliegender Bereich der Fahrbahn bereits ausgeleuchtet wird, um diesen überwachen zu können bzw. um den Fahrer auf diese Richtung aufmerksam zu machen.

Die entsprechenden Informationen bezüglich der tatsächlich vorhandenen Anzahl an Fahrspuren sind im Navigationssystem vorhanden, da in dem zugehörigen Datenspeicher sowohl die vorhandenen Strecken als auch die Streckenarten, wie mehrspurige Autobahn oder einspurige Landstraße, als Informationen abgespeichert sind. Selbstverständlich können in Ländern mit Linksverkehr die entsprechenden Informationen bezüglich der Fahrspuren und Fahrtrichtungen berücksichtigt werden, wobei aufgrund vorliegender Navigationsdaten, die mit entsprechenden Daten zur Regelung des Verkehrs verknüpft sind, ein automatisches Umschalten erfolgen kann, wie es aus den Stand der Technik bekannt ist .

Die Berücksichtigung der entsprechenden Daten des Navigationssystems kann entweder in einem zentralen Steuergerät bzw. einem Steuergerät des AFL-Scheinwerfer-systems erfolgen, wobei üblicherweise zur Realisierung ein bereits vorhandenes Steuergerät nur unwesentlich hard- und/oder softwaretechnisch modifiziert werden muss.

Natürlich erfolgt das Ausleuchten seitlicher oder seitlich vorausliegender Bereiche mit dem AFL-Scheinwerfersystem entweder über das Verschwenken der im Kraftfahrzeug vorhandenen Frontscheinwerfer bzw. deren Lichtkegel in an sich bekannter Weise oder über das Ausrichten von Lichtkegeln zusätzlicher Scheinwerfer, die im vorderen oder seitlichen Bereich des Kraftfahrzeugs angeordnet sind. Prinzipiell können auch zwei Scheinwerfer an beiden Seiten des Kraftfahrzeugs unabhängig voneinander angesteuert werden, um in Fahrtrichtung gesehen links und rechts voraus liegende Bereiche unterschiedlich auszuleuchten, wobei eine grundsätzliche Ausleuchtung nicht eingeschränkt werden soll.

Neben mehreren Fahrspuren ist unter den zuvor erläuterten Aspekten auch das Vorhandensein einer Kreuzung berücksichtigbar

Vorzugsweise ist bei der Ansteuerung des AFL-Scheinwerfersystems eine voraussichtlich zu befahrende Fahrspur berücksichtigbar. Dies kann bei einer mehrspurigen Fahrbahn derart erfolgen, dass beim Befahren der linken Fahrspur, was mit dem Navigationssystem in Verbindung mit dem Kamerasystem aus der tatsächlichen Position des Kraftfahrzeugs ermittelt wird, und bei einem vermutlich zu erwartenden Spurwechsel auf die rechte Fahrspur diese bereits ausgeleuchtet wird. Das demnächst voraussichtliche Befahren einer anderen Fahrspur kann beispielsweise daraus ermittelt werden, dass ein Abfahren von der Autobahn aufgrund der vorausberechneten Fahrtroute unmittelbar bevorsteht.

In gleicher Weise kann das AFL-Scheinwerfer-system angesteuert werden, wenn das Befahren einer Abbiege- oder Einfädelspur unmittelbar bevorsteht. In Kreuzungsbereichen ist es bekannt, besonders für Linksabbieger eine eigene Fahrspur vorzusehen. Soll an einer solchen Kreuzung nach links abgebogen werden, was vom Navigationssystem bekannt ist, kann dieser Fahrbahnabschnitt vom AFL-Scheinwerfersystem bereits ausgeleuchtet werden. Gleiches gilt selbstverständlich auch für eine Rechtsabbiegespur. Ebenso kann eine Einfädel- oder Abbiegespur einer mehrspurigen Fahrbahn bereits vor dem eigentlichen Befahren ausgeleuchtet werden, um dem Fahrer des Kraftfahrzeugs im Voraus den einzuschlagenden Weg anzudeuten.

Weiterhin werden bevorzugt bei der Ausrichtung des AFL-Scheinwerfersystems auch fahrzeuginterne Daten berücksichtigt, wie unter anderem ein Lenkradeinschlagwinkel, ein gesetzter Fahrtrichtungsanzeiger, die Stellung von Brems- und/oder Gaspedalen und ein Neigungswinkel der Karosserie, um das Blenden entgegenkommender Verkehrsteilnehmer zu vermeiden. Prinzipiell kann eine solche Ansteuerung unter Berücksichtigung fahrzeuginterner Daten auch bei einem ausgeschalteten Navigationssystem erfolgen.

Zur Verbesserung der Ausleuchtung zu befahrender Fahrbahnabschnitte sind zweckmäßigerweise auch die Informationen eines ein Kamerasystem umfassenden Bildverarbeitungssystems, das im Kraftfahrzeug vorhanden ist, berücksichtigbar. Mit solchen Bildverarbeitungssystemen können beispielsweise die seitlichen Fahrbahnmarkierungen erfasst werden, um ein Überfahren dieser Markierungen, z. B. bei Müdigkeit des Fahrers, festzustellen und entsprechende Warnsignale auszugeben. Ebenso können mit derartigen Bildverarbeitungssystemen auch Verkehrszeichen erfasst werden, um das Heranfahren an eine Kreuzung festzustellen und besonders bei überhöhter Geschwindigkeit den Fahrer darauf aufmerksam zu machen. Mit Bildverarbeitungssystemen kann auch das Vorhandensein einer Abbiege- oder Einfädelspur bzw. das Vorhandensein mehrerer Fahrbahnen in Fahrtrichtung oder einer Kreuzung festgestellt werden. Dementsprechend wird das AFL-System ausgerichtet um beispielsweise die Abbiegespur oder eine benachbarte Fahrspur ebenfalls auszuleuchten. Des Weiteren kann mit dem Bildverarbeitungssystem auch das Vorhandensein weiterer Verkehrsteilnehmer festgestellt werden, so dass insbesondere beim Abbiegen das Blenden eines entgegenkommenden Verkehrsteilnehmers durch die Ausrichtung des AFL-Scheinwerfersystems in Abbiegerichtung vermieden wird. Wird das Vorhandensein festgestellt, kann der Scheinwerfer beispielsweise nach unten ausgerichtet werden, um nur den Fahrbahnabschnitt selbst auszuleuchten. Ebenso können mit dem Bildverarbeitungssystem auch temporäre Hindernisse, die nicht im Navigationssystem abgespeichert sind, erfasst werden wie ein liegengebliebenes Fahrzeug am Fahrbahnrand, das zusätzlich angeleuchtet wird. Schließlich ist durch die Kopplung von Informationen des Bildverarbeitungssystems mit den Daten des Navigationssystems eine exakte Orts-Datenbestimmung zur Ansteuerung eines Scheinwerfers möglich. Derart exakte Orts-Daten stellen die zivilnutzbaren und bekannten Navigationssysteme in Alleinstellung derzeit nicht zur Verfügung. Durch das Bildverarbeitungssystem ist auch eine Erfassung von vorausfahrenden und entgegenkommenden Fahrzeugen möglich und eine Blendung anderer Verkehrsteilnehmer kann ausgeschlossen werden.

Im Rahmen der Erfindung ist es mitumfasst, dass besonders bei einem Fahrspurwechsel von dem AFL-Scheinwerfersystem auch in Fahrtrichtung gesehen hinter dem Kraftfahrzeug liegende Bereiche zusätzlich ausgeleuchtet werden, um beispielsweise ein Kraftfahrzeug im sogenannten toten Winkel feststellen zu können.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels mit Bezugnahme auf die Zeichnungen näher erläutert. Es zeigt:

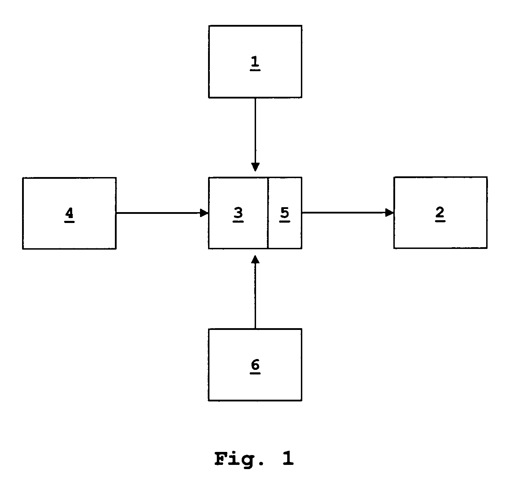

- Fig. 1: ein Blockschaltbild von mehreren Komponenten eines erfindungsgemäßen Kraftfahrzeugs und
- Fig. 2: schematisch das Ausleuchten von Bereichen vor dem Kraftfahrzeug.

Das Kraftfahrzeug 8 verfügt über ein Navigationssystem 1 zur Ausgabe von Fahrtrichtungsangaben vom momentanen Standpunkt zu einem vom Nutzer gewünschten Ziel und über ein AFL-Scheinwerfersystem 2, wobei ein oder mehrere Scheinwerfer bzw. deren Lichtkegel im Wesentlichen um eine vertikale Achse verschwenkt und ausgerichtet werden können.

In einem zentralen Steuergerät 3 bzw. einem Steuergerät des AFL-Scheinwerfersystems 2 werden die Daten des Navigationssystems 1 sowie gegebenenfalls weitere Fahrzeugdaten 4, wie Neigungswinkel, Lenkradeinschlagwinkel und dergleichen, berücksichtigt, um das AFL-Schein-werfersystem 2 entsprechend anzusteuern. Zusätzlich ist in dem Steuergerät 3 eine Bewertungseinheit 5 vorgesehen, mit der festgestellt werden kann, ob momentan eine mehrspurige Fahrbahn befahren wird oder das Abbiegen oder Einfädeln auf einer separaten Fahrspur unmittelbar bevorsteht. Entsprechende Informationen sind vom Navigationssystems 1 her bereits im Kraftfahrzeug vorhanden und können vom Steuergerät 3 bzw. der Bewertungseinheit 5 berücksichtigt werden.

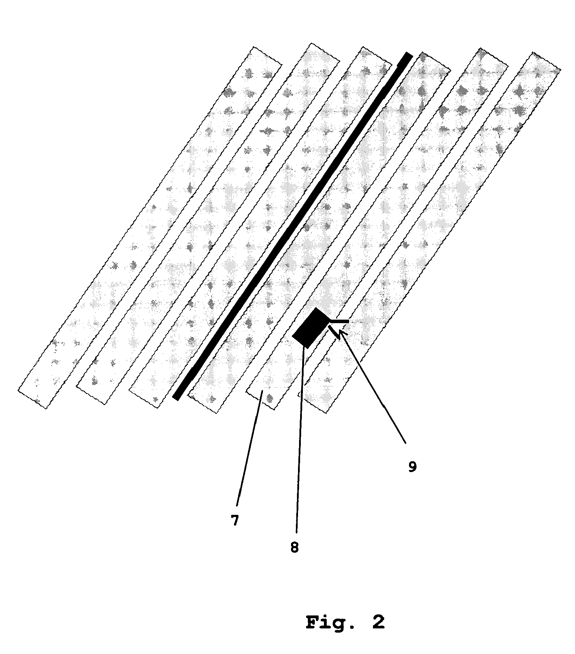

Steht beispielsweise auf einer mehrspurigen Fahrbahn 7 ein Spurwechsel unmittelbar bevor, wie in Fig. 2 dargestellt, kann ein rechts vorausliegender Bereich bzw. die rechts vorausliegende Fahrbahn bereits vor dem eigentlichen Spurwechsel mit dem AFL-Scheinwerfersystem 2 ausgeleuchtet werden, wie durch den schematischen Scheinwerferkegel 9 angedeutet, um das gefahrlose Wechseln einer Spur sicherzustellen. Dass ein solcher Spurwechsel unmittelbar bevorsteht, kann vom Navigationssystem 1 ermittelt werden, da unter anderem das Verlassen der mehrspurigen Fahrbahn aufgrund der im Navigationssystem 1 vorausberechneten Fahrtroute unmittelbar bevorsteht. Entsprechende Einstellungen, wie die Abstände bzw. Zeitdauer, zu denen bereits vorher die jeweiligen Fahrbahnabschnitte ausgeleuchtet werden sollen, können entweder vom Nutzer gewählt oder werksseitig unter Berücksichtigung einer höchstmöglichen Fahrsicherheit eingestellt werden.

Zusätzlich ist in dem Kraftfahrzeug 8 ein Bildverarbeitungssystem 6, beispielsweise eine Kamera mit einer entsprechenden Bildverarbeitungssoftware, vorhanden. Mit dem Bildverarbeitungssystem 6 kann sowohl das Vorhandensein weiterer Verkehrsteilnehmer, wie ein vorausfahrendes Kraftfahrzeug, oder das Vorhandensein eines Verkehrshindernisses, wie ein liegengebliebenes Kraftfahrzeug festgestellt werden. Wird beispielsweise ein Pannenfahrzeug auf dem Standstreifen registriert, kann das AFL-Schein-werfersystem 2 entsprechend angesteuert werden, um dieses Hindernis auszuleuchten, wodurch eine Kollisionsgefahr gemindert wird. Ebenso kann unter Berücksichtigung der Informationen des Bildverarbeitungssystems 6 ein Blenden entgegenkommender Verkehrsteilnehmer, insbesondere bei einem Abbiegevorgang, vermieden werden.

### Bezugszeichenliste

- 1.: Navigationssystem
- 2.: AFL-Scheinwerfersystem
- 3.: Steuergerät
- 4.: Fahrzeugdaten
- 5.: Bewertungseinheit
- 6.: Bildverarbeitungssystem
- 7.: Fahrbahn
- 8.: Kraftfahrzeug
- 9.: Scheinwerferkegel

## Patentansprüche

1. Kraftfahrzeug mit einem Navigationssystem (1) und einem AFL-Scheinwerfersystem (2), wobei eine Ausrichtung mindestens eines Scheinwerfers des Kraftfahrzeugs mit Informationen des Navigationssystems (1) beeinflussbar ist, **dadurch gekennzeichnet, dass** eine Anzahl an Fahrspuren als Information des Navigationssystems vorliegt und bei der Ausrichtung des Scheinwerfers berücksichtigbar ist.

2. Kraftfahrzeug nach Anspruch 1, **dadurch gekennzeichnet, dass** das Vorhandensein einer Kreuzung berücksichtigbar ist.

3. Kraftfahrzeug nach Anspruch 1 oder 2, **dadurch gekennzeichnet, dass** eine voraussichtlich zu befahrende Fahrspur berücksichtigbar ist.

4. Kraftfahrzeug nach einem der Ansprüche 1 bis 3, **dadurch gekennzeichnet, dass** das Vorhandensein einer Abbiege- oder Einfädelspur berücksichtigbar ist.

5. Kraftfahrzeug nach einem der Ansprüche 1 bis 4, **dadurch gekennzeichnet, dass** interne Fahrzeugdaten (4) berücksichtigbar sind.

6. Kraftfahrzeug nach einem der Ansprüche 1 bis 5, **dadurch gekennzeichnet, dass** Informationen eines Bildverarbeitungssystems (6) berücksichtigbar sind.
